# EUROPEAN PATENT APPLICATION

(11) **EP 4 836 164 A1**
(43) Date of publication of application: **04.11.2026**
(21) Application number: 24912159.1
(22) Date of filing: 26.11.2024
(51) Int. Cl.: H01M 50/477, H01M 10/052, H01M 10/0587, H01M 50/107, H01M 50/152, H01M 50/167, H01M 50/474, H01M 50/531, H01M 50/545, H01M 50/559, H01M 50/586, H01M 50/593

(54) **CYLINDRICAL BATTERY**

(30) Priority: 27.12.2023 JP 2023221126
(71) Applicant: Panasonic Intellectual Property Management Co., Ltd., Kadoma-shi, Osaka 571-0057 (JP)
(72) Inventor: TAKEUCHI Taizou, kadoma-shi, Osaka 571-0057 (JP); TAKANO Akira, kadoma-shi, Osaka 571-0057 (JP); MATSUMOTO Taiki, kadoma-shi, Osaka 571-0057 (JP)
(74) Representative: Eisenführ Speiser
(86) International application number: PCT/JP2024/041839
(87) International publication number: WO 2025/142268

(57) **Abstract**

This cylindrical battery is characterized by comprising: a wound electrode body (14); a cylindrical outer can (16) that accommodates the electrode body (14); a sealing body (17) that closes an opening of the outer can (16); and an insulating member (30) that is disposed on the outer side in the axial direction of the electrode body (14), the insulating member (30) having at least one or more protrusions (32).

## Description

### TECHNICAL FIELD

The present disclosure relates to a cylindrical battery.

### BACKGROUND ART

In general, a cylindrical battery comprises a winding-type electrode assembly obtained by winding a positive electrode and a negative electrode in a spiral shape via a separator, a housing can having a bottomed cylindrical shape that houses the electrode assembly, and a sealing assembly that closes an opening portion of the housing can (see, for example, Patent Literature 1). The housing can of the cylindrical battery includes a grooved portion formed with an annular groove cut in the outer circumferential surface thereof, a part of the inner circumferential surface of the grooved portion protruding to the radial direction inner side. For example, the grooved portion supports the sealing assembly and presses the outer circumferential portion of the electrode assembly to suppress movement of the electrode assembly.

### CITATION LIST

### PATENT LITERATURE

PATENT LITERATURE 1: Japanese Unexamined Patent Application Publication No. 2004-111105

### SUMMARY

As explained above, the grooved portion of the housing can contributes to the movement suppression for the electrode assembly. However, it is assumed that, when large vibration, impact, or the like is applied to the battery, movement of the electrode assembly cannot be sufficiently suppressed only by the grooved portion. In particular, when the diameter of the cylindrical battery increases, movement of the electrode assembly easily occurs and deviation of relative positions (so-called winding deviation) of the positive electrode, the negative electrode, and the separator constituting the electrode assembly can occur.

A cylindrical battery according to an aspect of the present disclosure comprises: a winding-type electrode assembly; a cylindrical housing can that houses the electrode assembly; a sealing assembly that closes an opening portion of the housing can; and an insulating member disposed on an axial direction outer side of the electrode assembly. The insulating member includes at least one or more projections.

With the cylindrical battery according to the aspect of the present disclosure, it is possible to suppress movement of the electrode assembly in the housing can. The configuration of the cylindrical battery according to the present disclosure is suitable for, for example, a large cylindrical battery having a large diameter.

### BRIEF DESCRIPTION OF DRAWING

FIG. 1 is an axial direction sectional view of a cylindrical battery in a first embodiment.
FIG. 2 is a plan view in which an insulating member constituting the cylindrical battery in the first embodiment is viewed from the upper side.
FIG. 3 is a plan view in which the insulating member constituting the cylindrical battery in the first embodiment is viewed from the upper side.
FIG. 4 is an axial direction sectional view of a cylindrical battery in a second embodiment.
FIG. 5 is a plan view in which an insulating member constituting the cylindrical battery in the second embodiment is viewed from the lower side.
FIG. 6 is an axial direction sectional view of a cylindrical battery in a third embodiment.
FIG. 7 is a perspective view of an upper part of the cylindrical battery in the third embodiment and is a diagram illustrating a state before a sealing assembly is crimped and fixed.
FIG. 8 is a perspective diagram of an insulating member constituting the cylindrical battery in the third embodiment and is a diagram illustrating a state before the sealing assembly is crimped and fixed.
FIG. 9 is a radial direction sectional view of the insulating member constituting the cylindrical battery in the third embodiment and is a diagram enlarging and illustrating the vicinity of a coupling portion.
FIG. 10 is a radial direction sectional view of the insulating member constituting the cylindrical battery in the third embodiment and is a diagram enlarging and illustrating the vicinity of the coupling portion.
FIG. 11 is an axial direction sectional view of a cylindrical battery in a fourth embodiment.
FIG. 12 is a plan view in which an insulating member constituting the cylindrical battery in the fourth embodiment is viewed from the lower side.

### DESCRIPTION OF EMBODIMENTS

An example of an embodiment of a cylindrical battery according to the present disclosure is explained in detail below with reference to the drawings. Note that configurations obtained by selectively combining constituent elements in pluralities of embodiments and modifications explained below are included in the scope of the present disclosure.

### [First Embodiment]

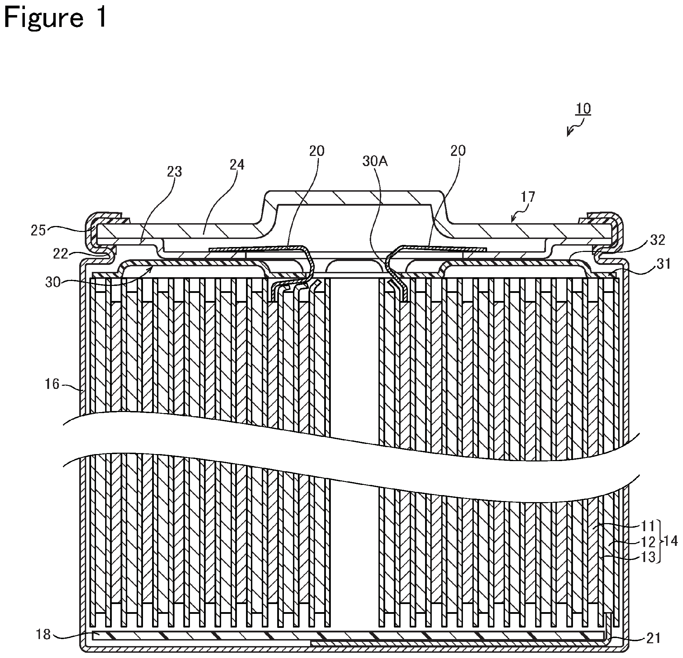

FIG. 1 is an axial direction sectional view of a cylindrical battery 10 in a first embodiment. As illustrated in FIG. 1, the cylindrical battery 10 comprises a winding-type electrode assembly 14, an electrolyte, a housing can 16 having a bottomed cylindrical shape that houses the electrode assembly 14 and the electrolyte, and a sealing assembly 17 that closes an opening portion of the housing can 16. The electrode assembly 14 includes a positive electrode 11, a negative electrode 12, and a separator 13 and has a winding structure in which the positive electrode 11 and the negative electrode 12 are spirally wound via the separator 13. In the following explanation, for convenience of explanation, the sealing assembly 17 side of the battery is referred to as "upper" and the bottom side of the housing can 16 is referred to as "lower".

All of the positive electrode 11, the negative electrode 12, and the separator 13 constituting the electrode assembly 14 are belt-shaped elongated bodies and are alternately stacked in the radial direction of the electrode assembly 14 by being spirally wound. The negative electrode 12 is formed in dimensions slightly larger than the positive electrode 11 in order to prevent lithium deposition. That is, the negative electrode 12 is formed longer in the longitudinal direction and the width direction than the positive electrode 11. The separator 13 is formed in dimensions slightly larger than at least the positive electrode 11. For example, two separators 13 are disposed to sandwich the positive electrode 11. Two positive electrode leads 20 connected to the positive electrode 11 by welding or the like and one negative electrode lead 21 connected to the negative electrode 12 by welding or the like are connected to the electrode assembly 14. Note that the number of positive electrode leads 20 and the number of negative electrode leads 21 are not limited to this.

The positive electrode 11 includes a positive electrode core and a positive electrode mixture layer disposed on the positive electrode core. As the positive electrode core, a foil of metal stable in a potential range of the positive electrode 11, such as aluminum, an aluminum alloy, stainless steel, or titanium, a film, on the surface layer of which the metal is disposed, and the like can be used. The positive electrode mixture layer preferably includes a positive electrode active material, a conductive agent, and a binder and is provided on both surfaces of the positive electrode core excluding a portion to which the positive electrode leads 20 are connected. As the positive electrode active material, a lithium transition metal composite oxide containing transition metal elements such as Ni, Co, and Mn is used.

The negative electrode 12 includes a negative electrode core and a negative electrode mixture layer disposed on the negative electrode core. As the negative electrode core, a foil of metal stable in a potential range of the negative electrode 12, such as copper, a copper alloy, stainless steel, nickel, or a nickel alloy, a film, on the surface of which the metal is disposed, and the like can be used. The negative electrode mixture layer preferably includes a negative electrode active material and a binder and is provided on both surfaces of the negative electrode core excluding a portion to which the negative electrode lead 21 is connected. As the negative electrode active material, in general, a carbon material that irreversibly occludes and emits lithium ions is used. As the negative electrode active material, an element alloyed with Li, such as Si or Sn, a material containing the element, or the like may be used.

As the separator 13, a porous sheet having ion permeability and insulation is used. Specific examples of the porous sheet include a microporous membrane, a woven fabric, and an non-woven fabric. As the material of the separator 13, polyolefin such as polyethylene or polypropylene, cellulose, or the like is preferable. The separator 13 may have either a single layer structure or a multilayer structure. The separator 13 may have a multilayer structure including a thermoplastic resin layer of polyolefin or the like and a cellulose fiber layer, a two-layer structure of polyethylene (PE)/polypropylene (PP), or a three-layer structure of PE/PP/PE.

The electrolyte may be an aqueous electrolyte. However, in the present embodiment, it is assumed that a non-aqueous electrolyte is used. The non-aqueous electrolyte has lithium ion conductivity. The non-aqueous electrolyte may be a liquid electrolyte (an electrolytic solution) or may be a solid electrolyte.

The liquid electrolyte (the electrolytic solution) includes a non-aqueous solvent and electrolyte salt dissolved in the non-aqueous solvent. As the non-aqueous solvent, for example, esters, ethers, nitriles, amides, and a mixed solvent of two or more kinds of theses is used. Examples of the non-aqueous solvent include ethylene carbonate (EC), ethyl methyl carbonate (EMC), dimethyl carbonate (DMC), diethyl carbonate (DEC), and a mixed solvent of these. The non-aqueous solvent may contain a halogen-substituted product (for example, fluoroethylene carbonate) obtained by substituting at least a part of hydrogens of these solvents with halogen atoms such as fluorine. As the electrolyte salt, lithium salt such as LiPF6 is used.

As the solid electrolyte, for example, a sold or gel polymer electrolyte and an inorganic solid electrolyte and the like can be used. As the inorganic solid electrolyte, materials (for example, an oxide-based solid electrolyte, a sulfide-based solid electrolyte, and halogen-based solid electrolyte) publicly known in an all-solid-state lithium ion secondary battery and the like can be used. The polymer electrolyte includes, for example, lithium salt and a matrix polymer, or a non-aqueous solvent, lithium salt, and a matrix polymer. As the matrix polymer, for example, a polymer material that absorbs a non-aqueous solvent to gel is used. Examples of the polymer material include fluorocarbon resin, acrylic resin, and polyether resin.

As explained in detail below, an insulating member 30 having a circular shape in an upper surface is disposed between the electrode assembly 14 and the sealing assembly 17. The insulating member 30 has a function of suppressing movement of the electrode assembly 14 in the housing can 16 by pressing the electrode assembly 14 from above in addition to suppressing contact of the electrode assembly 14 and a grooved portion 22 formed in the housing can 16.

The positive electrode leads 20 extend to the sealing assembly 17 side passing through a through hole 30A provided in the radial direction center of the insulating member 30. Then, the positive electrode leads 20 are bent along the upper surface of an upper terminal plate 23 constituting the sealing assembly 17 and are joined to the upper surface of the upper terminal plate 23 by welding or the like. Accordingly, the sealing assembly 17 becomes a positive electrode terminal.

A lower insulating plate 18 is disposed below the electrode assembly 14. The negative electrode lead 21 extends to the bottom side of the housing can 16 passing through the outer side of the lower insulating plate 18. Then, the negative electrode lead 21 is joined to the inner surface of the bottom of the housing can 16 by welding or the like. Accordingly, the housing can 16 becomes a negative electrode terminal. The housing can 16 and the sealing assembly 17 are connected to external circuits such as another battery constituting a battery module, a charger, and the like.

The housing can 16 is a metal container having a bottomed cylindrical shape opened on axial direction one side. The opening portion of the housing can 16 is closed by the sealing assembly 17. A gasket 25 is provided between the housing can 16 and the sealing assembly 17 and airtightness of the battery inside is secured.

In the housing can 16, the grooved portion 22, a part of a side surface portion of which projects to the inner side to support the sealing assembly 17, is formed. The grooved portion 22 is preferably annularly formed in the circumferential direction of the housing can 16 and supports the sealing assembly 17 with the upper surface thereof. The grooved portion 22 has a function of suppressing movement of the electrode assembly 14 by pressing the outer circumferential portion of the electrode assembly 14.

The sealing assembly 17 has a function of closing the opening portion of the housing can 16. In the present embodiment, the sealing assembly 17 is constituted by the upper terminal plate 23 to which the positive electrode leads 20 are joined and a sealing plate 24 that covers the upper terminal plate 23. The sealing assembly 17 is crimped and fixed to the opening portion of the housing can 16 via the gasket 25. Note that a configuration of the sealing assembly 17 is not limited to this if the sealing assembly 17 can close the opening portion of the housing can 16.

The upper terminal plate 23 is an annular plate-shaped member made of metal and includes a through hole in the center. The upper terminal plate 23 includes a recess hollowed to the lower side. The positive electrode leads 20 are joined to the recess. The outer circumferential portion of the upper terminal plate 23 is in contact with the outer circumferential portion of the sealing plate 24. The outer circumferential portion of the upper terminal plate 23 is preferably joined to the sealing plate 24 by laser welding or the like.

The sealing plate 24 is a plate-shaped member made of metal not including a through hole. Projections protruding toward the battery outer side are provided in the center of the sealing plate 24. The projections have, for example, a substantially circular shape in top view.

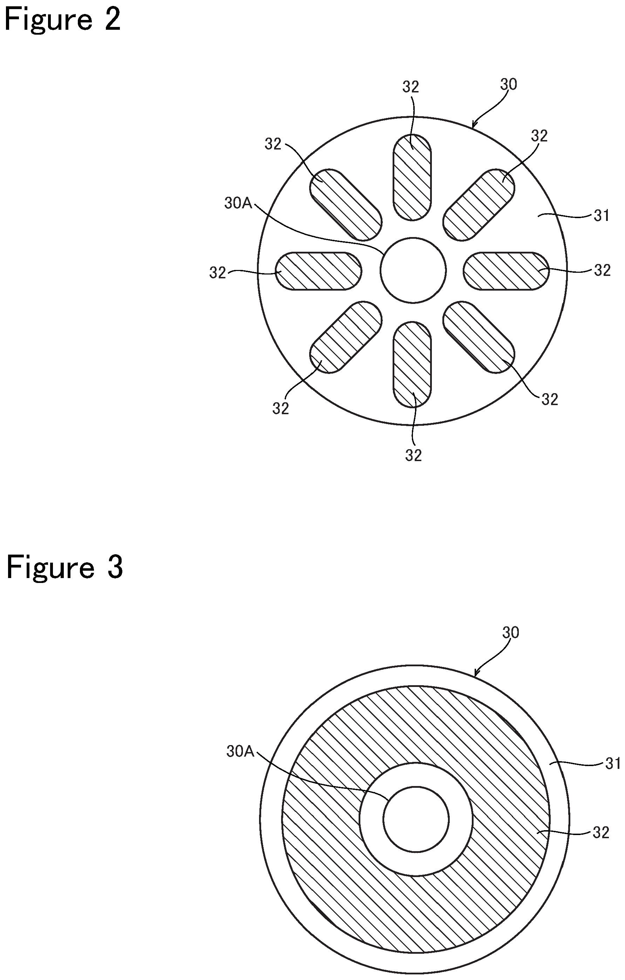

Next, the insulating member 30 is explained in detail further with reference to FIG. 2. FIG. 2 is a plan view at the time when the insulating member 30 is viewed from the upper side. Note that, in FIG. 2, regions where projections 32 explained below are provided are indicated by hatching.

As illustrated in FIG. 1 and FIG. 2, the insulating member 30 is a circular member including a base portion 31 that is in contact with the upper surface of the electrode assembly 14 and projections 32 that project toward the sealing assembly 17 side (the upper side) with respect to the base portion 31. The insulating member 30 prevents an internal short circuit from being caused by contact of the electrode assembly 14 and the grooved portion 22 as explained above. The thickness of the insulating member 30 is, for example, greater than or equal to 0.3 mm and less than or equal to 10.0 mm and may be greater than or equal to 0.5 mm and less than or equal to 5.0 mm. In the present embodiment, the base portion 31 and the projections 32 respectively have substantially the same thicknesses.

Since the insulting member 30 includes the projections 32, even when large vibration, impact, or the like is applied to the battery and when the diameter of the cylindrical battery 10 is large, it is possible to suppress movement of the electrode assembly 14. Specifically, when the electrode assembly 14 moves to the upper side and the insulating member 30 is pushed up to the upper side, since the projections 32 come into contact with the sealing assembly 17, it is possible to limit the movement to the upper side of the electrode assembly 14.

The height of the projections 32 is preferably greater than or equal to 50% and more preferably greater than or equal to 90% of the distance from the upper end of the electrode assembly 14 to the lower end of the sealing assembly 17 (the upper terminal plate 23). It is possible to further suppress movement of the electrode assembly 14 by setting the height of the projections 32 to greater than or equal to 50% of the distance from the upper end of the electrode assembly 14 to the lower end of the sealing assembly 17. The height of the projections 32 is, for example, greater than or equal to 0.5 mm and less than or equal to 10.0 mm and may be greater than or equal to 1.0 mm and less than or equal to 5.0 mm. Note that the height of the projections 32 means the length in the axial direction (the up-down direction) from the lower surface of the insulating member 30 (the base portion 31) to the tops (the upper ends) of the projections 32. In the present embodiment, the projections 32 are not in contact with the lower surface of the upper terminal plate 23. However, the projections 32 may be in contact with the lower surface of the upper terminal plate 23.

As illustrated in FIG. 2, a plurality of projections 32 are radially disposed on the insulating member 30. Specifically, the plurality of projections 32 extend from the center of the insulating member 30 toward the radial direction outer side and are disposed at substantially equal angle intervals from one another in the circumferential direction. By radially disposing the projections 32, when the electrode assembly 14 moves to the upper side and the electrode assembly 14 comes into contact with the insulating member 30, it is possible to reduce a load applied to the electrode assembly 14 from the insulating member 30. Accordingly, it is possible to suppress damage to the electrode assembly 14. By radially disposing the projections 32, it is possible to prevent the electrode assembly 14 from deviating in the circumferential direction. Accordingly, it is possible to suppress occurrence of winding deviation of the electrode assembly 14.

In the top view of the insulating member 30, a ratio of an area of the regions where the projections 32 are provided to a total area of the insulating member 30 is, for example, greater than or equal to 10% and less than or equal to 80% and may be greater than or equal to 20% and less than or equal to 70%. By increasing the ratio of the area of the regions where the projections 32 are provided to the total area of the insulating member 30, it is easy to suppress movement of the electrode assembly 14. On the other hand, by reducing the ratio of the area of the regions where the projections 32 are provided to the total area of the insulating member 30, it is possible to reduce the load applied to the electrode assembly 14 from the insulating member 30 and it is easy to suppress damage to the electrode assembly 14.

One through hole 30A is provided in the center of the insulating member 30. In the present embodiment, the positive electrode leads 20 extending from the positive electrode 11 pass through the through hole 30A. By providing the through hole 30A in the insulating member 30, when gas is generated in the battery inside, for example, at the time of abnormal heat generation of the battery, it is possible to discharge the gas through the through hole 30A. By providing the through hole 30A in the insulating member 30, it is possible to improve injectability at the time when the electrolyte is injected into the inside of the housing can 16 in a manufacturing process for the battery.

The material of the insulating member 30 is not particularly limited. However, for example, polypropylene (PP), polyphenylene sulfide (PPS), polyethylene (PE), polybutylene terephthalate (PBT), perfluoro alkoxy alkanes (PFA), polytetrafluoroethylene (PTFE), and polyamide (PA) can be used. The insulating member 30 can be manufactured by, for example, injection molding.

Note that, in the embodiment explained above, the insulating member 30 has substantially uniform thickness in all regions including the regions where the projections 32 are provided. However, the insulating member 30 is not limited to this. For example, in the insulating member 30, the regions where the projections 32 are provided may be formed thick. In that case, the lower surface of the insulating member 30 may be formed on the same plane over the entire region.

In the embodiment explained above, the projections 32 are radially disposed. However, the shape and the disposition of the projections 32 are not limited to this. For example, as illustrated in FIG. 3, the projections 32 may have an annular shape or an arcuate shape extending in the circumferential direction. Note that, in FIG. 3, as in FIG. 2, the regions where the projections 32 are provided are indicated by hatching.

In the embodiment explained above, the one through hole 30A is provided in the center of the insulating member 30. However, the through hole 30A is not limited to this. For example, the through hole 30A may be provided in the outer circumferential portion of the insulating member 30 instead of or in addition to the center of the insulating member 30.

A plurality of through holes 30A may be provided in the insulating member 30. When the plurality of through holes 30A are provided in the insulating member 30, for example, the through hole 30A through which the positive electrode leads 20 do not pass may be present. By providing the plurality of through holes 30A, when gas is generated in the battery inside, for example, at the time of abnormal heat generation of the battery, it is possible to improve exhaust performance of the gas. By providing the plurality of through holes 30A, it is possible to further improve the injectability at the time when the electrolyte is injected into the inside of the housing can 16 in the manufacturing process for the battery.

### [Second Embodiment]

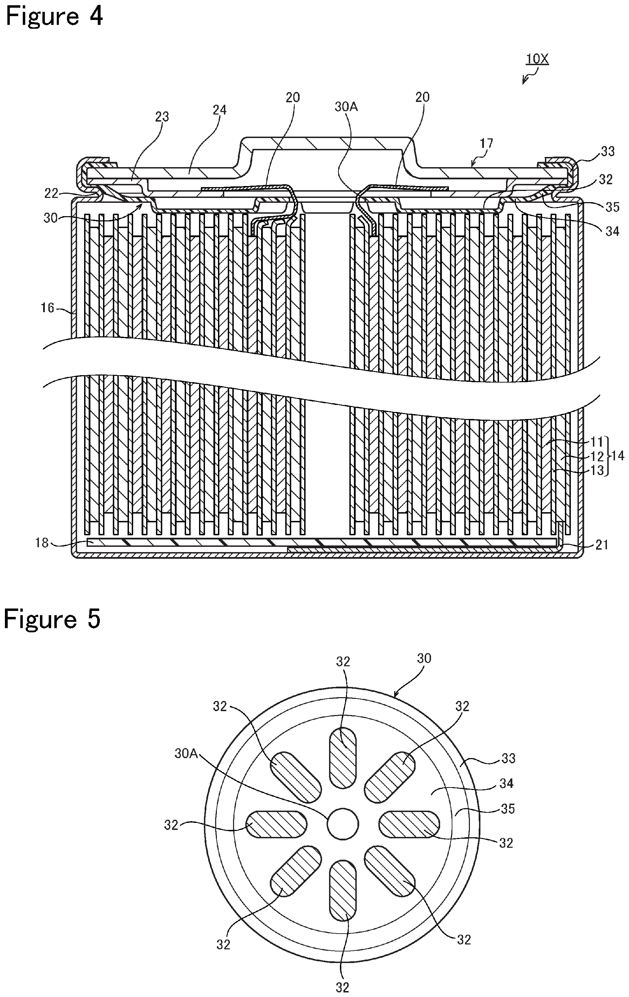

Next, a configuration of a cylindrical battery 10X according to a second embodiment is explained with reference to FIG. 4 and FIG. 5. FIG. 4 is an axial direction sectional view of the cylindrical battery 10X. FIG. 5 is a plan view at the time when the insulating member 30 is viewed from the lower side. In FIG. 5, the regions where the projections 32 are provided are indicated by hatching. In the following explanation, concerning components common to the first embodiment, redundant explanation is omitted by using the same reference numerals and signs, and differences from the first embodiment are mainly explained.

As illustrated in FIG. 4, the cylindrical battery 10X in the second embodiment is common to the cylindrical battery 10 in the first embodiment in that the cylindrical battery 10X comprises the winding-type electrode assembly 14, an electrolyte, the housing can 16 having a bottomed cylindrical shape that houses the electrode assembly 14 and the electrolyte, and the sealing assembly 17 that closes an opening portion of the housing can 16. On the other hand, the cylindrical battery 10X in the second embodiment is different from the first embodiment in that the cylindrical battery 10X does not comprise the gasket 25 (see FIG. 1) and the insulating member 30 has a function of the gasket 25.

As illustrated in FIG. 4 and FIG. 5, the insulating member 30 includes an outer circumferential portion 33 that sandwiches the outer circumference of the sealing assembly 17 from the axial direction both sides, an inner circumferential portion 34 disposed to face the upper surface of the electrode assembly 14, and a coupling portion 35 that couples the outer circumferential portion 33 and the inner circumferential portion 34. The sealing assembly 17 is crimped and fixed to an opening portion of the housing can 16 via the outer circumferential portion 33. That is, the outer circumferential portion 33 has a function of the gasket 25 in the cylindrical battery 10 in the first embodiment. Since the insulating member 30 has the function of the gasket 25, it is possible to reduce the number of components constituting the cylindrical battery 10X.

The outer circumferential portion 33 is disposed between the sealing assembly 17 and the housing can 16 and is annularly formed in the circumferential direction of the housing can 16. The size, the shape, and the like of the outer circumferential portion 33 are not particularly limited if it is possible to secure airtightness of the battery inside when the sealing assembly 17 is crimped and fixed to the opening portion of the housing can 16 via the outer circumferential portion 33. Since the outer circumferential portion 33 is fixed to the opening portion of the housing can 16, the insulating member 30 is prevented from shifting on the inside of the housing can 16. As a result, it is possible to suppress damage to the positive electrode leads 20 caused by the insulating member 30 coming into contact with the positive electrode leads 20.

The inner circumferential portion 34 is disposed further on the electrode assembly 14 side than the outer circumferential portion 33 and disposed to face the upper surface of the electrode assembly 14. In the inner circumferential portion 34, the projections 32 protruding toward the electrode assembly 14 side (the lower side) are provided. By providing the projections 32 in the inner circumferential portion 34, even when large vibration, impact, or the like is applied to the battery and when the diameter of the cylindrical battery is large, it is possible to suppress movement of the electrode assembly 14. Specifically, when the electrode assembly 14 moves to the upper side, since the electrode assembly 14 comes into contact with the projections 32, it is possible to limit movement to the upper side of the electrode assembly 14. The through hole 30A through which the positive electrode leads 20 pass is provided in the center of the inner circumferential portion 34.

The height of the projections 32 is preferably greater than or equal to 50% and more preferably greater than or equal to 70% of the distance from the upper end of the electrode assembly 14 to the lower end of the sealing assembly 17 (the upper terminal plate 23). By setting the height of the projections 32 to greater than or equal to 50% of the distance from the upper end of the electrode assembly 14 to the lower end of the sealing assembly 17, it is possible to further suppress movement of the electrode assembly 14. Note that the height of the projections 32 means length in the axial direction (the up-down direction) from the upper surface of the inner circumferential portion 34 to the tops (the lower ends) of the projections 32. In the present embodiment, the projections 32 are not in contact with the upper surface of the electrode assembly 14. However, the projections 32 may be in contact with the upper surface of the electrode assembly 14.

As illustrated in FIG. 5, the projections 32 are radially disposed as in the first embodiment. Specifically, the plurality of projections 32 extend from the center of the insulating member 30 toward the radial direction outer side and are disposed at substantially equal angle intervals from one another in the circumferential direction. Note that the projections 32 may have an annular shape or an arcuate shape extending in the circumferential direction.

The coupling portion 35 is a part that couples the outer circumferential portion 33 and the inner circumferential portion 34. The coupling portion 35 has, for example, a shape gradually inclining to the electrode assembly 14 side toward the radial direction center side. Note that the coupling portion 35 may extend in the axial direction as illustrated in a third embodiment explained below. For example, the coupling portion 35 is provided over the entire circumference of the inner circumferential portion 34.

The thickness of the coupling portion 35 is not particularly limited and may be, for example, larger than the thickness of the inner circumferential portion 34. The thickness of the coupling portion 35 may be different in the radial direction. For example, the thickness of the coupling portion 35 may decrease toward the radial direction center side.

### [Third Embodiment]

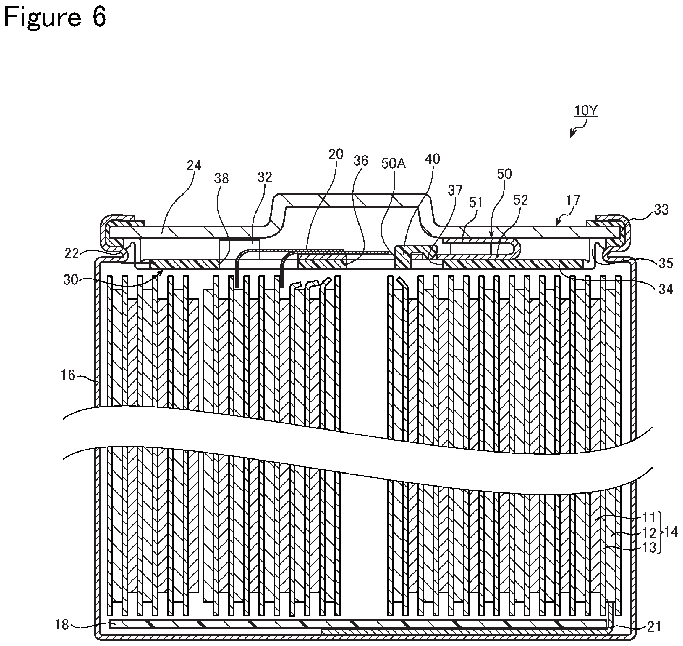

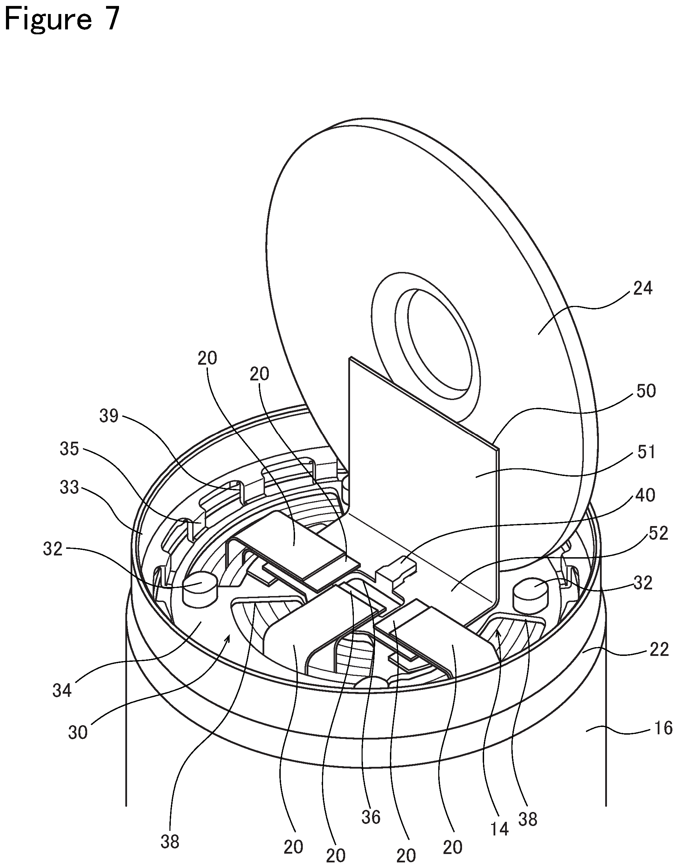

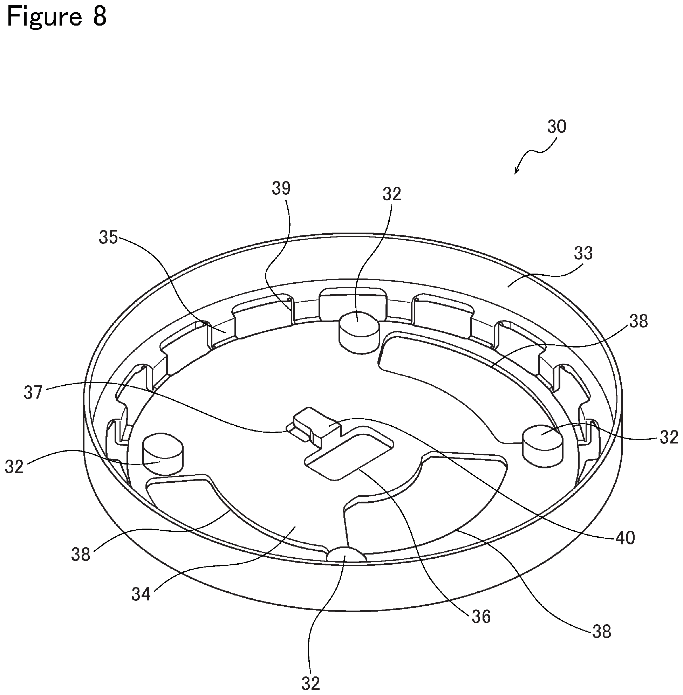

Next, a configuration of a cylindrical battery 10Y according to a third embodiment is explained with reference to FIG. 6 to FIG. 10. FIG. 6 is an axial direction sectional view of the cylindrical battery 10Y, FIG. 7 is a perspective view of an upper part of the cylindrical battery 10Y and is a diagram illustrating a state before the sealing assembly 17 is crimped and fixed, and FIG. 8 is a perspective view of the insulating member 30 and is a diagram illustrating a state before the sealing assembly 17 is crimped and fixed. In the following explanation, concerning components common to the second embodiment, redundant explanation is omitted by using the same reference numerals and signs, and differences from the second embodiment are mainly explained.

As illustrated in FIG. 6 and FIG. 7, the cylindrical battery 10Y in the third embodiment is common to the cylindrical battery 10X in the second embodiment in that the cylindrical battery 10Y comprises the winding-type electrode assembly 14, an electrolyte, the housing can 16 having a bottomed cylindrical shape that houses the electrode assembly 14 and the electrolyte, and the sealing assembly 17 that closes an opening portion of the housing can 16 and does not comprise the gasket 25 (see FIG. 1). On the other hand, the cylindrical battery 10Y in the third embodiment is different from the second embodiment in that the cylindrical battery 10Y comprises six positive electrode leads 20 and comprises, between the sealing assembly 17 and the insulating member 30, a current collector member 50 to which the positive electrode leads 20 are connected.

In the present embodiment, the six positive electrode leads 20 are disposed in three pairs, with the positive electrode leads 20 in each of the pairs overlapping each other. The positive electrode leads 20 are bent toward the radial direction inner side above the electrode assembly 14 and joined to the upper surface of the current collector member 50 by welding or the like. Note that the number and the disposition of the positive electrode leads 20 are not limited to this. The positive electrode leads 20 may be joined to the lower surface of the current collector member 50 by welding or the like.

The current collector member 50 is disposed between the sealing assembly 17 and the insulating member 30 and electrically connects the positive electrode leads 20 and the sealing assembly 17. The current collector member 50 has a wider shape than the positive electrode leads 20 and has size not in contact with the grooved portion 22 of the housing can 16. The current collector member 50 is made of, for example, metal containing aluminum as a main component.

The current collector member 50 has a folded shape in a state in which the sealing assembly 17 is crimped and fixed. Specifically, the current collector member 50 includes a first region 51 joined to the sealing plate 24 constituting the sealing assembly 17 and a second region 52 disposed to face the first region 51 in the state in which the sealing assembly 17 is crimped and fixed.

In the first region 51, a welded portion (not illustrated) for joining the current collector member 50 to the sealing plate 24 is formed. In the second region 52, a welded portion (not illustrated) for joining the positive electrode leads 20 to the current collector member 50 is formed. A through hole 50A is formed in the second region 52. The through hole 50A is formed at, for example, a position overlapping a winding axis of the electrode assembly 14. When gas is generated in the battery inside, for example, at the time of abnormal heat generation of the battery, the through hole 50A functions as an exhaust port for the gas.

As illustrated in FIG. 6 to FIG. 8, the insulating member 30 includes the outer circumferential portion 33 that sandwiches the outer circumference of the sealing assembly 17 from the axial direction both sides, the inner circumferential portion 34 disposed to face the upper surface of the electrode assembly 14, and a plurality of coupling portions 35 that couple the outer circumferential portion 33 and the inner circumferential portion 34 in the radial direction. The sealing assembly 17 is crimped and fixed to an opening portion of the housing can 16 via the outer circumferential portion 33. That is, the outer circumferential portion 33 has a function of the gasket 25 (see FIG. 1) in the cylindrical battery 10 in the first embodiment.

In the inner circumferential portion 34, a first through hole 36 provided at a position facing the through hole 50A of the current collector member 50, a second through hole 37 provided at a position facing a fixing portion 40 explained below, and three third through holes 38 through which the positive electrode leads 20 pass are provided. That is, the positive electrode leads 20 do not pass through the first through hole 36 and the second through hole 37. By providing the first through hole 36 and the second through hole 37, when gas is generated in the electrode inside, for example, at the time of abnormal heat generation of the battery, it is possible to improve exhaust performance of the gas. Note that the shape and the disposition of the first through hole 36, the second through hole 37, and the third through holes 38 can be set as appropriate according to a battery size and the shape, the number, and the like of the positive electrode leads 20.

As illustrated in FIG. 8, four projections 32 are provided in the inner circumferential portion 34. In the present embodiment, the projections 32 have a substantially circular shape in top view. The four projections 32 are disposed at approximately 90° intervals in the circumferential direction. By providing the projections 32 in the inner circumferential portion 34, it is possible to suppress movement of the electrode assembly 14 as explained above. Note that the number of the projections 32 is not limited to this and may be, for example, greater than or equal to five. As in the first embodiment, the projections 32 may be radially disposed. In the present embodiment, the projections 32 are not in contact with the lower surface of the sealing plate 24. However, the projections 32 may be in contact with the lower surface of the sealing plate 24.

In the inner circumferential portion 34, a fixing portion 40 for fixing the insulating member 30 and the current collector member 50 is provided. The fixing portion 40 has, for example, a bent shape. The lower surface of the fixing portion 40 is in contact with the upper surface of the second region 52 of the current collector member 50.
Accordingly, the current collector member 50 is sandwiched between the inner circumferential portion 34 and the fixing portion 40 and is fixed to the insulating member 30. Note that a configuration of the fixing portion 40 is not limited to this if the fixing portion 40 is capable of fixing the insulating member 30 and the current collector member 50. For example, the fixing portion 40 may have a concave shape for holding the current collector member 50.

The coupling portions 35 are parts that couple the outer circumferential portion 33 and the inner circumferential portion 34. The coupling portions 35 extend in the axial direction. The coupling portions 35 are disposed at predetermined intervals in the circumferential direction. Accordingly, fourth through holes 39 are formed among the coupling portions 35 adjacent in the circumferential direction. Since the fourth through holes 39 are provided, the electrolyte passes through the fourth through holes 39 when the electrolyte is injected into the inside of the housing can 16 in a manufacturing process for the battery. Accordingly, it is possible to improve injectability of the electrolyte.

Since the fourth through holes 39 are provided, the coupling portions 35 moderately bend when the electrode assembly 14 moves to the upper side and the electrode assembly 14 comes into contact with the insulating member 30. Accordingly, it is possible to reduce a load applied to the electrode assembly 14 from the insulating member 30. As a result, it is possible to suppress damage to the electrode assembly 14 due to the load applied from the insulating member 30. In other words, by changing the shape, the size, and the like of the fourth through holes 39, it is possible to adjust the load applied to the electrode assembly 14 from the insulating member 30. For example, by increasing the fourth through holes 39 in size, that is, reducing the coupling portions 35 in size, it is possible to reduce the load applied to the electrode assembly 14 from the insulating member 30.

In the circumferential direction, the length of regions where the fourth through holes 39 are formed with respect to the total circumferential length of the insulating member 30 is, for example, greater than or equal to 40% and less than or equal to 90% and may be greater than or equal to 50% and less than or equal to 80%. In other words, the length of the regions where the coupling portions 35 are formed with respect to the total circumferential length of the insulating member 30 is, for example, greater than or equal to 10% and less than or equal to 60% and may be greater than or equal to 20% and less than or equal to 50%. By setting the length of the regions where the fourth through holes 39 are formed with respect to the total circumferential length of the insulating member 30 to greater than or equal to 40% and less than or equal to 90%, it is easy to limit movement of the electrode assembly 14 to the upper side while reducing the load applied to the electrode assembly 14 from the insulating member 30.

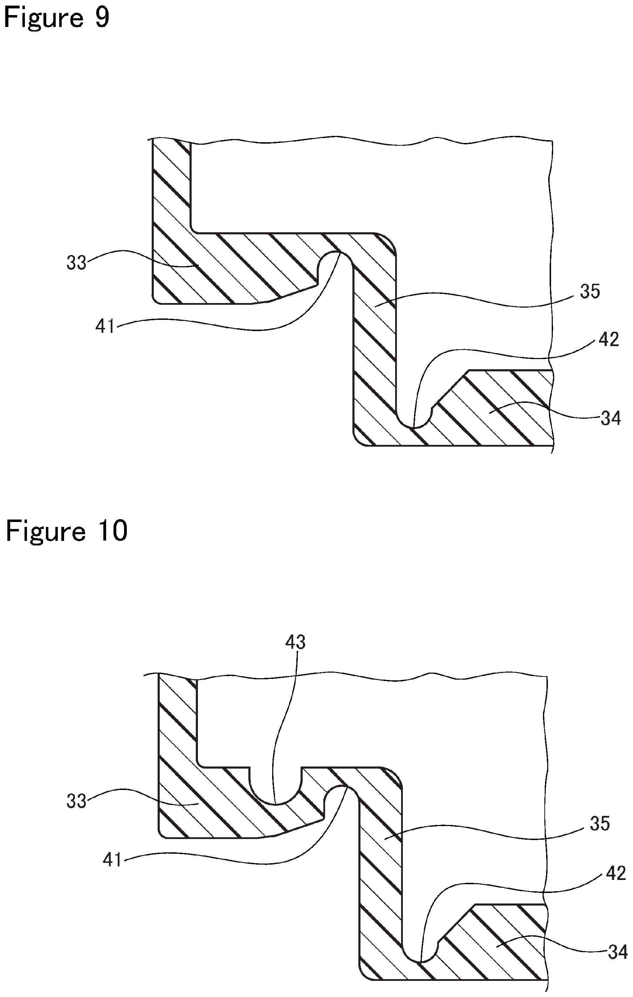

FIG. 9 is a radial direction sectional view of the insulating member 30 in the vicinity of the coupling portion 35. As illustrated in FIG. 9, in the insulating member 30, a first groove portion 41 and a second groove portion 42 extending in the circumferential direction are provided. Specifically, the first groove portion 41 is provided on the lower surface of the radial direction inner end of the outer circumferential portion 33 and the second groove portion 42 is provided on the upper surface of the radial direction outer end of the inner circumferential portion 34. The first groove portion 41 and the second groove portion 42 are respectively preferably provided over the entire circumference of the insulating member 30. By providing the first groove portion 41 and the second groove portion 42 in the insulating member 30, since the insulating member 30 bends starting from the first groove portion 41 and the second groove portion 42 when the electrode assembly 14 moves to the upper side, it is possible to reduce the load applied to the electrode assembly 14 from the insulating member 30.

The size, the shape, and the like of the first groove portion 41 and the second groove portion 42 can be set as appropriate according to a battery size or the like. The depth of the first groove portion 41 is, for example, greater than or equal to 20% and less than or equal to 80% of the thickness of the outer circumferential portion 33. Similarly, the depth of the second groove portion 42 is, for example, greater than or equal to 20% and less than or equal to 80% of the thickness of the inner circumferential portion 34. In the present embodiment, the first groove portion 41 includes an inclined region where a groove width linearly increases toward the lower side. The second groove portion 42 includes an inclined region where a groove width linearly increases toward the upper side.

The bottoms of the first groove portion 41 and the second groove portion 42 have a substantially semicircular shape in sectional view. Note that the bottoms of the first groove portion 41 and the second groove portion 42 may have, for example, a V shape in sectional view. Only one of the first groove portion 41 and the second groove portion 42 may be provided in the insulating member 30.

FIG. 10 is a diagram illustrating a modification of the shape of the insulating member 30 in the vicinity of the coupling portion 35 and is a diagram corresponding to FIG. 9. As illustrated in FIG. 10, in the insulating member 30, a third groove portion 43 may be provided in addition to the first groove portion 41 and the second groove portion 42. The third groove portion 43 is provided on the upper surface of the outer circumferential portion 33 and disposed further on the radial direction outer side than the first groove portion 41. By providing the third groove portion 43 in the insulating member 30 in addition to the first groove portion 41 and the second groove portion 42, when the electrode assembly 14 moves to the upper side, it is possible to further reduce the load applied to the electrode assembly 14 from the insulating member 30. In the example illustrated in FIG. 10, the third groove portion 43 has a substantially semicircular shape in sectional view. Note that, like the first groove portion 41 and the second groove portion 42, the third groove portion 43 may include an inclined region where a groove width linearly increases toward the upper side.

### [Fourth Embodiment]

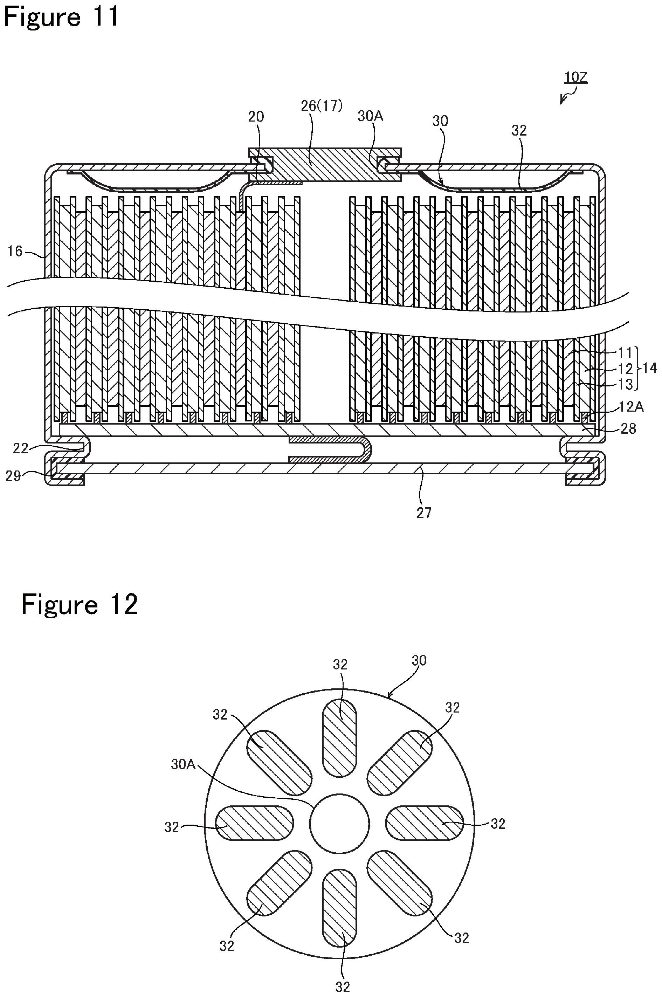

Next, a configuration of a cylindrical battery 10Z according to a fourth embodiment is explained with reference to FIG. 11 and FIG. 12. FIG. 11 is an axial direction sectional view of the cylindrical battery 10Z and FIG. 12 is a plan view in which the insulating member 30 is viewed from the lower side. In FIG. 12, regions where the projections 32 are provided are indicated by hatching. In the following explanation, concerning components common to the first embodiment, redundant explanation is omitted by using the same reference numerals and signs, and differences from the first embodiment are mainly explained.

As illustrated in FIG. 11, the cylindrical battery 10Z in the fourth embodiment comprises the winding-type electrode assembly 14, an electrolyte, and the housing can 16 that houses the electrode assembly 14 and the electrolyte. The housing can 16 is a cylindrical metal container including opening portions at the axial direction both ends. The opening portion on the top surface portion side of the housing can 16 is closed by a rivet 26 serving as the sealing assembly 17. The opening portion on the bottom side of the housing can 16 is closed by a lower sealing plate 27.

As illustrated in FIG. 11 and FIG. 12, the insulating member 30 is provided above the electrode assembly 14. The insulating member 30 includes the through hole 30A in the center. The vicinity of the through hole 30A is turned back toward the radial direction outer side and interposed between the housing can 16 and the rivet 26. Accordingly, it is possible to seal a gap between the opening portion of the housing can 16 and the rivet 26.

In the insulating member 30, the projections 32 protruding toward the electrode assembly 14 side (the lower side) are provided. By providing the projections 32, as explained above, even when large vibration, impact, or the like is applied to the battery and when the diameter of the cylindrical battery is large, it is possible to suppress movement of the electrode assembly 14.

As illustrated in FIG. 12, in the present embodiment, the projections 32 are radially disposed as in the second embodiment. Specifically, the plurality of projections 32 extend from the center of the insulating member 30 toward the radial direction outer side and are disposed at substantially equal angle intervals from one another in the circumferential direction. Note that the projections 32 may have an annular shape or an arcuate shape extending in the circumferential direction.

The rivet 26 is a member made of metal and is fixed to the opening portion on the top surface portion side of the housing can 16 via the insulating member 30. The positive electrode leads 20 are joined to the rivet 26. Accordingly, the rivet 26 becomes a positive electrode terminal.

A lower terminal plate 28 electrically connected to the negative electrode 12 is provided below the electrode assembly 14. A connection method for the negative electrode 12 and the lower terminal plate 28 is not particularly limited. For example, a negative electrode core exposed portion 12A in which a negative electrode core constituting the negative electrode 12 is exposed may be provided and the negative electrode core exposed portion 12A may be joined to the lower terminal plate 28. A negative electrode lead extending from the negative electrode 12 may be joined to the lower terminal plate 28.

On the bottom side of the housing can 16, the grooved portion 22, a part of a side surface portion of which projects to the inner side, is formed. On the lower side of the grooved portion 22, the lower sealing plate 27 is crimped and fixed to the bottom of the housing can 16 via a gasket 29. Note that a fixing method for the lower sealing plate 27 is not limited to this. For example, the lower sealing plate 27 may be fixed to the bottom of the housing can 16 by welding the outer edge of the lower sealing plate 27 to the bottom of the housing can 16.

The lower sealing plate 27 is electrically connected to the lower terminal plate 28. Accordingly, the lower sealing plate 27 becomes a negative electrode terminal. A connection method for the lower sealing plate 27 and the lower terminal plate 28 is not particularly limited. For example, a lead extending from the lower terminal plate 28 may be joined to the lower terminal plate 28. The lower sealing plate 27 and the lower terminal plate 28 may be electrically connected via the housing can 16.

The present disclosure is further explained by the following embodiment.

### Configuration 1:

A cylindrical battery comprising: a winding-type electrode assembly; a cylindrical housing can that houses the electrode assembly; a sealing assembly that closes an opening portion of the housing can; and an insulating member disposed on an axial direction outer side of the electrode assembly, wherein the insulating member includes at least one or more projections.

### Configuration 2:

The cylindrical battery described in the configuration 1, wherein the insulating member is in contact with the electrode assembly.

### Configuration 3:

The cylindrical battery described in the configuration 1 or 2, wherein the sealing assembly is crimped and fixed to an opening portion of the housing can via the insulating member.

### Configuration 4:

The cylindrical battery described in any one of the configurations 1 to 3, wherein the projections protrude toward the sealing assembly side or the electrode assembly side.

### Configuration 5:

The cylindrical battery described in any one of the configurations 1 to 4, wherein the projections extend from a center side of the insulating member toward a radial direction outer side.

### Configuration 6:

The cylindrical battery described in any one of the configurations 1 to 5, wherein the insulating member includes a plurality of the projections, and the plurality of projections are disposed at substantially equal angle intervals in a circumferential direction of the housing can.

### Configuration 7:

The cylindrical battery described in any one of the configurations 1 to 6, wherein height of the projections is greater than or equal to 50% of a distance from an end portion on the sealing assembly side of the electrode assembly to an end portion on the electrode assembly side of the sealing assembly.

### Configuration 8:

The cylindrical battery described in any one of the configurations 1 to 7, further comprising an electrode lead connected to an electrode constituting the electrode assembly, wherein a plurality of through holes are provided in the insulating member, and the electrode lead passes through at least one of the plurality of through holes.

### Configuration 9:

The cylindrical battery described in the configuration 8, wherein the electrode lead does not pass through at least one of the plurality of through holes.

### Configuration 10:

The cylindrical battery described in any one of the configurations 1 to 9, wherein the insulating member includes: an outer circumferential portion that sandwiches the sealing assembly from axial direction both sides; an inner circumferential portion disposed to face a surface on the sealing assembly side of the electrode assembly; and a coupling portion that couples the outer circumferential portion and the inner circumferential portion.

### Configuration 11:

The cylindrical battery described in the configuration 10, wherein the insulating member includes a plurality of the coupling portions.

### Configuration 12:

The cylindrical battery described in the configuration 11, wherein the plurality of coupling portions are provided at substantially equal angle intervals in a circumferential direction of the housing can.

### Configuration 13:

The cylindrical battery described in any one of the configurations 10 to 12, wherein a groove portion extending in a circumferential direction of the housing can is provided in the insulating member.

### Configuration 14:

The cylindrical battery described in any one of the configurations 1 to 13, further comprising: an electrode lead connected to an electrode constituting the electrode assembly; and a current collector member to which the electrode lead is joined and that electrically connects the electrode lead and the sealing assembly, wherein a fixing portion for fixing the insulating member and the current collector member is provided in the insulating member.

### Configuration 15:

The cylindrical battery described in any one of the configurations 1 to 14, wherein the housing can includes an opening portion in a bottom.

### REFERENCE SIGNS LIST

10, 10X, 10Y, 10Z Cylindrical battery, 11 Positive electrode, 12 Negative electrode, 12A Negative electrode core exposed portion, 13 Separator, 14 Electrode assembly, 16 Housing can, 17 Sealing assembly, 18 Lower insulating plate, 20 Positive electrode lead (Electrode lead), 21 Negative electrode lead (Electrode lead), 22 Grooved portion, 23 Upper terminal plate, 24 Sealing plate, 25 Gasket, 26 Rivet, 27 Lower sealing plate, 28 Lower terminal plate, 29 Gasket, 30 Insulating member, 30A Through hole, 31 Base portion, 32 Projections, 33 Outer circumferential portion, 34 Inner circumferential portion, 35 Coupling portion, 36 First through hole, 37 Second through hole, 38 Third through hole, 39 Fourth through hole, 40 Fixing portion, 41 First groove portion, 42 Second groove portion, 43 Third groove portion, 50 Current collector member, 50A Through hole, 51, First region, 52 Second region

## Claims

1. A cylindrical battery comprising:
a winding-type electrode assembly;
a cylindrical housing can that houses the electrode assembly;
a sealing assembly that closes an opening portion of the housing can; and
an insulating member disposed on an axial direction outer side of the electrode assembly, wherein
the insulating member includes at least one or more projections.

2. The cylindrical battery according to claim 1, wherein the insulating member is in contact with the electrode assembly.

3. The cylindrical battery according to claim 1, wherein the sealing assembly is crimped and fixed to an opening portion of the housing can via the insulating member.

4. The cylindrical battery according to claim 1, wherein the projections protrude toward the sealing assembly side or the electrode assembly side.

5. The cylindrical battery according to claim 1, wherein the projections extend from a center side of the insulating member toward a radial direction outer side.

6. The cylindrical battery according to claim 1, wherein
the insulating member includes a plurality of the projections, and
the plurality of projections are disposed at substantially equal angle intervals in a circumferential direction of the housing can.

7. The cylindrical battery according to claim 1, wherein height of the projections is greater than or equal to 50% of a distance from an end portion on the sealing assembly side of the electrode assembly to an end portion on the electrode assembly side of the sealing assembly.

8. The cylindrical battery according to claim 1, further comprising an electrode lead connected to an electrode constituting the electrode assembly, wherein
a plurality of through holes are provided in the insulating member, and
the electrode lead passes through at least one of the plurality of through holes.

9. The cylindrical battery according to claim 8, wherein the electrode lead does not pass through at least one of the plurality of through holes.

10. The cylindrical battery according to claim 1, wherein the insulating member includes:
an outer circumferential portion that sandwiches the sealing assembly from axial direction both sides;
an inner circumferential portion disposed to face a surface on the sealing assembly side of the electrode assembly; and
a coupling portion that couples the outer circumferential portion and the inner circumferential portion.

11. The cylindrical battery according to claim 10, wherein the insulating member includes a plurality of the coupling portions.

12. The cylindrical battery according to claim 11, wherein the plurality of coupling portions are provided at substantially equal angle intervals in a circumferential direction of the housing can.

13. The cylindrical battery according to claim 1, wherein a groove portion extending in a circumferential direction of the housing can is provided in the insulating member.

14. The cylindrical battery according to claim 1, further comprising:
an electrode lead connected to an electrode constituting the electrode assembly; and
a current collector member to which the electrode lead is joined and that electrically connects the electrode lead and the sealing assembly, wherein
a fixing portion for fixing the insulating member and the current collector member is provided in the insulating member.

15. The cylindrical battery according to claim 1, wherein the housing can includes an opening portion in a bottom.
